# NEUE EUROPÄISCHE PATENTSCHRIFT

(11) **EP 0 436 822 B2**
(45) Veröffentlichungstag und Bekanntmachung des Hinweises auf die Entscheidung über den Einspruch: **04.03.1998**
(45) Hinweis auf die Patenterteilung: 10.08.1994
(21) Anmeldenummer: 90122687.8
(22) Anmeldetag: 27.11.1990
(51) Int. Cl.: B01D 53/34, B01D 53/02, C04B 7/60

(54) **Verfahren zur Reinigung der Abgase von Anlagen zur Herstellung von Zementklinker**
Process for the purification of exhaust gases of plants for the production of cement clinker
Procédé pour la purification des gaz d'échappement des installations pour la production de clinker

(30) Priorität: 12.01.1990 DE 4000795
(43) Veröffentlichungstag der Anmeldung: 17.07.1991
(73) Patentinhaber: KRUPP POLYSIUS AG, 59269 Beckum (DE)
(72) Erfinder: Kupper, Detlev, Dr.-Ing., W-4404 Telgte (DE); Rother, Wolfgang, Dipl.-Ing., W-4740 Oelde (DE); Bentrup, Ludger, Dr.-Ing., W-4740 Oelde 1 (DE)
(74) Vertreter: Tetzner, Volkmar, Dr.-Ing. Dr. jur.

(56) Entgegenhaltungen:
- EP-A- 0 268 118
- EP-B- 228 111
- DE-A- 3 522 883
- DE-A- 3 642 178
- DE-A- 3 643 143
- GB-A- 2 122 916
- JAPANESE PATENT GAZETTE, Woche 8804, Sektion Ch, 9. März 1988, Klasse J, Seite2, Zusammenfassung Nr. 88-024308/04, Derwent Publications Ltd, London, GB;& JP-A-62 283 848 (ISHIKAWAJIMA-HARIMA JUKO) 09-12-1987
- ZEMENT-KALK-GIPS (ZKG), Band 41, Nr. 4, April 1988, Seiten 193-201, Wiesbaden,DE; W. KREFT: "Konzepte zum Umweltschutz in der Zementindustrie"

## Beschreibung

Die Erfindung betrifft ein Verfahren (entsprechend dem Oberbegriff des Anspruches 1) zur Reinigung der Abgase von Anlagen zur Herstellung von Zementklinker, ferner eine Anlage (gemäß dem Gattungsbegriff des Anspruches 20) zur Herstellung von Zementklinker.

Bei der Herstellung von Zementklinker enthalten die Abgase der (im allgemeinen durch einen Drehrohrofen gebildeten) Fertigbrennzone meist einen mehr oder weniger großen Anteil an Stickstoffoxiden (sog. NOₓ-Gehalt).Die Bildung dieser Stickstoffoxide geschieht teils durch Reaktion des Sauerstoffs mit dem Stickstoff der Verbrennungsluft, teils durch Oxidation der Stickstoffverbindungen des Brennstoffes (vgl. "Zement-Kalk-Gips" 37/1984, S.499-507).

Der NOₓ-Gehalt der Abgase ist wegen der hierdurch verursachten Emissionsprobleme unerwünscht. Es wurden daher bereits verschiedene Verfahren entwickelt, um den NOₓ-Gehalt der Abgase zu verringern.

So ist es bei Vorcalcinierverfahren bekannt, in der Vorcalcinationszone außerhalb des Drehrohrofens durch unterstöchiometrische Verbrennung von Brennstoff eine reduzierende Atmosphäre zu erzeugen ("ICS proceedings" 1979, S.45, Fig.6). Hierbei erfolgt die Calcination des vorgewärmten Gutes in zwei Stufen: Die erste Stufe wird mit Abluft der Kühlzone unter Sauerstoffmangel betrieben, so daß ein CO-haltiges Gasgemisch aus dieser Vorcalcinationszone in die Ofenabgasleitung eintritt. In dieser Ofenabgasleitung bildet sich damit zunächst eine reduzierende Zone, in der ein Teil des NOₓ zu Stickstoff reduziert wird. In dem anschließenden Teil der Ofenabgasleitung werden durch Einführung eines weiteren Teiles von Kühlerabluft Verbrennungsbedingungen geschaffen, so daß der Restausbrand des Brennstoffes erfolgt.

Die DE-A-35 22 883 beschreibt weiterhin ein Verfahren, bei dem in die Abgase des Drehrohrofens außerhalb des Drehrohrofens vor der Einmündung der Abgase der Vorcalcinationszone zusätzlicher Brennstoff eingeführt wird, wobei die Menge dieses zusätzlichen Brennstoffes und der Sauerstoffgehalt der Abgase der Brennzone so bemessen werden, daß in der Zone vor der Einmündung der Abgase der Vorcalcinationszone eine unterstöchiometrische Verbrennung in den Abgasen der Brennzone erfolgt.

Gegenstand der DE-A-39 25 475.5 ist weiterhin ein Verfahren, bei dem in den Guteintragsbereich des Drehrohrofens ein Teil des für die gesamte Wärmebehandlung eingesetzten Brennstoffes zwecks Erzeugung einer reduzierenden Atmosphäre sowie wenigstens ein die Wirkung dieser reduzierenden Atmosphäre auf die NOₓ-Reduktion unterstützendes Verstärkungsreagenz eingeführt werden.

Nun enthalten die Abgase von Anlagen zur Herstellung von Zementklinker außer dem vorstehend behandelten NOₓ vielfach auch NH₃, SOₓ, HCL sowie Schwermetalle und Spurenschadstoffe, die zu Emissionsproblemen führen können. Für die Beseitigung dieser Schadstoffe stehen bisher noch keine zugleich wirkungsvoll und wirtschaftlich arbeitenden Verfahren zur Verfügung.

Der Erfindung liegt daher die Aufgabe zugrunde, ein Verfahren (entsprechend dem Oberbegriff des Anspruches 1) sowie eine Anlage (gemäß dem Gattungsbegriff des Anspruches 20) zu entwickeln, die es gestatten, mit sehr wirkungsvoll und zugleich wirtschaftlich arbeitenden Mitteln den NOₓ-Gehalt der Abgase deutlich zu senken und zugleich die Abgase von störenden Schwermetallen und Spurenschadstoffen zu reinigen.

Diese Aufgabe wird erfindungsgemäß durch die kennzeichnenden Merkmale der Ansprüche 1 bzw. 20 gelöst. Zweckmäßige Ausgestaltungen der Erfindung sind Gegenstand der Unteransprüche.

Bei dem erfindungsgemäßen Verfahren enthält die zur Reinigung der Abgase dienende Filterzone wenigstens eine Adsorptionsstufe, in der ein Adsorbens vorgesehen ist, das zur Einbindung von in den Abgasen enthaltenen NHₓ-Verbindungen, Schwermetallen, Spurenschadstoffen und/oder SO₂ geeignet ist (die NHₓ-Verbindungen liegen in den Abgasen einer Klinkerbrennanlage entweder in Form von Aerosolen oder von Gasbestandteilen vor). Erfindungsgemäß wird nun wenigstens ein Teil dieses mit NHₓ-Verbindungen, Schwermetallen und Spurenschadstoffen (außerdem - wie noch erläutert wird - meist mit SO₂ und H₂O) beladenen Adsorbens in bestimmten Zeitintervallen bzw. bei einer bestimmten Beladung aus der Adsorptionsstufe entfernt und wenigstens ein Teil in die Fertigbrenn-, Calcinier- und/oder Vorwärmzone eingeführt.

Als bestimmender Faktor für die Ausschleusung des Adsorbens kann auch die SOₓ-Beladung auf dem Adsorbens und/oder der Druckverlust mindestens einer Adsorptionsschicht herangezogen werden.

In dem Brennprozeß zur Klinkerherstellung werden die an das Adsorbens angelagerten NHₓ-Verbindungen wieder freigesetzt und tragen wesentlich zur Reduktion der beim Klinkerbrennprozeß entstehenden NOₓ-Verbindungenbei. Auf diese Weise wird bereits während des Klinkerbrennprozesses eine deutliche NOₓ-Minderung erreicht, so daß sich die in der Filterzone zu erbringende Entstickungsleistung verringert.

Die am Adsorbens angelagerten Schwermetalle und/oder Spurenschadstoffe werden bei Einführung des Adsorbens in den Klinkerbrennprozeß weitestgehend in den Klinker eingebunden und auf diese Weise wirksam aus den Abgasen der Zementklinkerbrennanlage entfernt.

Bei dem erfindungsgemäßen Verfahren enthält die Filterzone wenigstens folgende, von den zuvor weitestgehend entstaubten Abgasen nacheinander durchströmte Filterstufen:
- eine zur Einbindung von NHₓ-Verbindungen, Schwermetallen und Spurenschadstoffen sowie von SO₂ dienende Adsorptionsstufe,
- sowie eine zur zumindest teilweisen Reduzierung von NOₓ-Verbindungen dienende weitere Adsorptionsstufe.

Zwischen den beiden letztgenannten Adsorptionsstufen wird zweckmäßig ein NH₃-haltiges Gas in den zu reinigenden Abgasstrom eingeführt.

Die zur Einbindung von NHₓ-Verbindungen, Schwermetallen und Spurenschadstoffen sowie von SO₂ und Wasserdampf dienende Adsorptionsstufe kann dabei wenigstens zwei in Reihe geschaltete, vom Abgas nacheinander durchströmte Adsorptionskammern aufweisen, wobei vorzugsweise Adsorbens aus der ersten Adsorptionskammer in die Fertigbrenn-, Calcinier- und/oder Vorwärmzone eingeführt wird.

In der ersten Adsorptionskammer werden Schwefeloxide (SO₂) zumindest teilweise adsorptiv an das Adsorbens angelagert. In der zweiten Adsorptionskammer werden dann am hier befindlichen Adsorbens die die erste Adsorptionskammer mit dem Gasstrom verlassenden Schwefeloxide ganz oder nahezu vollständig adsorbiert.

In der dann folgenden Adsorptionsstufe werden die im Gasstrom vorhandenen Stickoxide (NOₓ-Verbindungen) mit einem NH₃-haltigen Gas am Adsorbens, das sich in dieser Adsorptionsstufe befindet, katalytisch zumindest teilweise reduziert. Hierbei entsteht vorwiegend Stickstoff und Wasserdampf.

Zumindest ein Teil des mit NHₓ-Verbindungen und SO₂ beladenen Adsorbens kann zweckmäßig aus der zur Einbindung von NHₓ-Verbindungen bestimmten Adsorptionsstufe in die zur Reduzierung von NOₓ-Verbindungen dienende Adsorptionsstufe eingeführt werden. Auf diese Weise wird in der letztgenannten Adsorptionsstufe überschüssiges bzw. durchbrechendes NH₃ mittels SO₂-haltigen Adsorbens aus der vorangehenden Adsorptionsstufe eingebunden.

Als Adsorbens kann ein kohlenstoffhaltiges Material, z.B. Aktivkohle, Verwendung finden. Da dieses Material auch einen Heizwert besitzt` wirkt es bei Einführung in den Klinkerbrennprozeß zugleich als Brennstoff.

Bei Verwendung eines kohlenstoffhaltigen Adsorbens werden ferner in den Abgasen enthaltene Kohlenwasserstoffverbindungen und/oder geruchsbildende Gasbestandteile vom Adsorbens zumindest teilweise zurückgehalten, wobei diese Kohlenwasserstoffverbindungen und/oder geruchsbildenden Bestandteile bei Einführung des hiermit beladenen Adsorbens in den Klinkerbrennprozeß oxidiert werden.

Als geeignetes Adsorbens hat sich weiterhin ein Zeolith erwiesen (d.h. ein aluminiumhaltiges Silikat).

Auch stickstoffhaltige Materialien, vorzugsweise Kalk-Stickstoff-Verbindungen, können vorteilhaft als Adsorbens im Rahmen des erfindungsgemäßen Verfahrens benutzt werden.

Die in die Fertigbrenn-, Calcinier- und/oder Vorwärmzone eingeführte Menge des mit NHₓ-Verbindungen, Schwermetallen und SO₂ beladenen Adsorbens wird zweckmäßig in Abhängigkeit vom Cl- und/oder SO₃-Gehalt des Gutes geändert, wobei dieser Schadstoffgehalt des Gutes vorzugsweise an der Schnittstelle zwischen Vorwärm- bzw. Vorcalcinationszone und Fertigbrennzone gemessen wird. Die Änderung der Menge des in den Klinkerbrennprozeß eingeführten Adsorbens kann in Form einer Steuerung oder Regelung erfolgen.

Die Menge des Adsorbens, das aus der zur Einbindung von NHₓ-Verbindungen und/oder Schwermetallen dienenden Adsorptionsstufe entfernt wird, sowie der Zeitpunkt dieser Entfernung werden zweckmäßig durch Messung der Konzentration zumindest einer Abgaskomponente, vorzugsweise hinter dieser Adsorptionsstufe, bestimmt. Auch hierbei können Änderungen entweder in Form einer einfachen Steuerung oder als automatische Regelung durchgeführt werden.

Des weiteren können als Regelgröße der Druckverlust in dieser Adsorptionskammer oder die Beladung des Adsorbens mit einer Gaskomponente herangezogen werden.

Der Wassergehalt des Abgases vor dem Eintritt in die zur Einbindung von NHₓ-Verbindungen, Schwermetallen und SO₂ dienende Adsorptionsstufe wird durch Zumischung von Frischluft auf einen geeigneten Wert, vorzugsweise auf unter 12 Vol-%, eingestellt.

Die Temperatur des Abgases vor Eintritt in die zur Einbindung von NHₓ-Verbindungen, Schwermetallen und SO₂ dienende Adsorptionsstufe wird durch Zumischung von Frischluft vorzugsweise auf einen Wert zwischen 50 und 200 °C eingestellt.

Im Hinblick auf den in Zementwerken wahlweise üblichen Direktbetrieb oder Verbundbetrieb (bei diesem werden die Abgase zunächst einer Mahltrockungsanlage zugeführt, ehe sie zum Elektrofilter gelangen) werden die Abgase durch Zumischung von Frischluft in ihren Eigenschaften den Erfordernissen der Adsorption angepaßt, so daß für beide Betriebsweisen ähnliche Eingangsbedingungen für die Filterzone vorliegen.

Findet - wie üblich - eine von der Gutaustragsseite her beheizte Fertigbrennzone (meist Drehrohrofen) Verwendung, so kann erfindungsgemäß zumindest ein Teil des aus der Adsorptionsstufe entfernten Adsorbens von der Gutaustragsseite her in die Fertigbrennzone eingeführt werden.

Bei Verwendung einer von der Gutaustragsseite her beheizten Fertigbrennzone kann ferner zusätzlich zum Adsorbens ein kohlenstoffhaltiges Reduktionsmittel in den Guteintragsbereich der Fertigbrennzone eingeführt werden, z. B. über einen Ofeneinlauf-Brenner. Auf diese Weise wird in dem genannten Guteintragsbereich der Fertigbrennzone (d.h. bei einem Drehrohrofen in dessen Guteintragszone) eine reduzierende Atmosphäre erzeugt, wodurch die NOₓ-reduzierende Wirkung des Adsorbens verstärkt wird.

Das erfindungsgemäße Reinigungsverfahren gestattet weiterhin die weitgehende Verwendung von Sekundärbrennstoffen, wobei die Emission von Schadstoffen, insbesondere von halogenierten organischen Verbindungen, wie Dioxinen und Furanen, im Vergleich zu bekannten Verfahren um bis zu zwei Zehnerpotenzen gesenkt werden kann.

Aufgrund der speziellen verfahrenstechnischen Bedingungen beim Brennen von Zementklinker (insbesondere aufgrund der hohen Temperaturen und verhältnismäßig langen Verweilzeiten bei diesen hohen Temperaturen) hat man schon bisher in gewissem Umfang einen Teil des normalerweise für die Zementherstellung verwendeten Brennstoffes (wie Kohle, Öl oder Gas) durch sogenannte Sekundärbrennstoffe ersetzt. Bei diesen Sekundärbrennstoffen handelt es sich beispielsweise um Altreifen, Säureharze, Bleicherde, Brennstoff aus Müll, Deponiegas, Pyrolysegas, Lösungsmittelsrückstände, PCB-kontaminiertes Altöl, Klärschlamm, Holzspäne und/oder Fruchtschalen.

Trotz der vorstehend genannten besonderen Prozeßbedingungen bei der Zementherstellung haben jedoch Messungen gezeigt, daß es vielfach (beispielsweise bei der Verbrennung PCB-haltiger Altöle) doch noch zu meßbaren Emissionen von Dioxinen und Furanen sowie von anderen, teilweise chlorierten Verbindungen kommen kann. Aufgrund der besonderen Giftigkeit dieser Substanzen sowie mit Rücksicht darauf, daß diese Verbindungen nicht oder nur in sehr geringem Maße biologisch abbaubar sind und sich damit in der Umwelt anreichern, sind derartige Schadstoffemissionen sehr bedenklich.

Für viele Sekundärbrennstoffe kam bisher wegen ihrer vielfach hohen thermischen Stabilität nur die Hauptfeuerung einer Drehrohrofenanlage in Betracht, da nur auf diese Weise die erforderlichen hohen Temperaturen von mehr als 1200°C und Gasverweilzeiten von mehr als 2 s erreicht wurden. Ein Einsatz der Sekundärbrennstoffe in der Hauptfeuerung einer Drehrohrofenanlage setzt jedoch aus feuerungstechnischen Gründen regelmäßig eine Vorbehandlung der Sekundärbrennstoffe (wie Zerkleinerung oder Homogenisierung) voraus, was sehr aufwendig ist.

Bei Anwendung des erfindungsgemäßen Reinigungsverfahrens können nun auch Sekundärbrennstoffe, die thermisch verhältnismäßig stabile Verbindungen darstellen, in der Vorcalcinierzone (d. h. in dem zur Entsäuerung des Rohmateriales dienenden Teil der Vorwärmzone) verbrannt werden oder in einfacher Weise in den guteintragsseitigen Bereich der Fertigbrennzone, d. h. in den Einlauf des Drehrohrofens eingeführt werden. Die hierbei eventuell entstehenden Crackprodukte sowie die noch nicht vollständig aufoxidierten gasförmigen Produkte werden in der oben bereits im einzelnen beschriebenen, erfindungsgemäßen Filterzone adsorbiert.

Für die Wirtschaftlichkeit des Verfahrens ist es dabei von großer Bedeutung, daß die Adsorptionsmittel entweder aufgrund ihrer chemischen Zusammensetzung zur Zementherstellung geeignet sind oder daß beispielsweise der Kohlenstoffgehalt der Adsorptionsmittel einen Teil der zur Zementherstellung erforderlichen thermischen Energie beisteuern kann.

Das beladene Adsorptionsmittel wird entweder periodisch oder kontinuierlich aus der Adsorptionsstufe abgezogen und durch frisches Material ersetzt. Das beladene Adsorptionsmittel wird - falls es sich um ein brennbares Material handelt - vorzugsweise durch Zugabe über den Hauptbrenner in die Hochtemperaturzone des Drehrohrofens eingeführt. Auch bei den nichtbrennbaren Stoffen empfielt sich eine Rückführung in die Fertigbrennzone, d. h. in den Drehrohrofen, da hierdurch die adsorbierten organischen Schadstoffe ein zweites Mal einer thermischen Behandlung unterworfen und hierdurch weitestgehend abgebaut werden.

Außer organischen Komponenten, wie Dioxinen, Furanen sowie anderen halogenierten oder nichthalogenierten Kohlenwasserstoffen, können mit der erfindungsgemäßen Adsorptionsstufe auch andere umweltrelevante Schadstoffe, wie etwa leicht verdampfbare Schwermetallverbindungen, abgeschieden werden. Bei Quecksilber, Thallium oder Cadmium ist es dann notwendig, zur Vermeidung von Anreicherungen in Kreisläufen eine entsprechende Senke zu schaffen. Dies kann durch Installation eines Gas-Bypasses geschehen. Eine zweite Möglichkeit besteht darin, einen Teil des Elektrofilterstaubes zu verwerfen (Ablagerung auf einer Deponie oder Zumahlung zum Zement). Bei einer Zumahlung zum Zement werden die im Filterstaub enthaltenen Schwermetalle letztlich umweltneutral in den Beton eingebunden.

Einige Ausführungsbeispiele zur Durchführung des erfindungsgemäßen Verfahrens sind in der Zeichnung veranschaulicht. Es zeigen
- Fig.1: eine Schemadarstellung einer erfindungsgemäßen Anlage zur Herstellung von Zementklinker,
- Fig.2 und 3: Varianten der Filterzone.

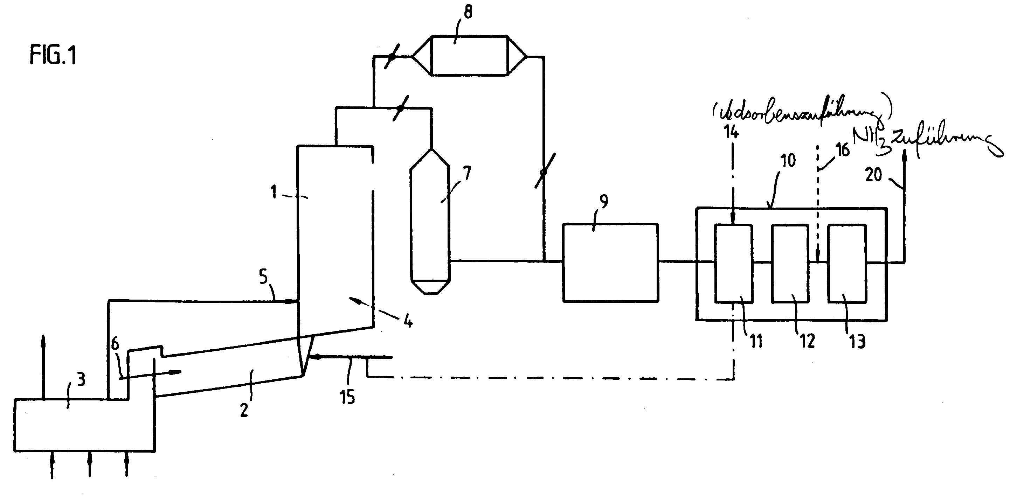

Die in Fig.1 ganz schematisch veranschaulichte Anlage zur Herstellung von Zementklinker enthält einen zur Vorwärmung und zumindest teilweisen Entsäuerung des Rohmateriales dienenden Vorwärmers 1, einen zum Fertigbrennen des vorgewärmten und entsäuerten Gutes dienenden Drehrohrofen 2 sowie einen Kühler 3. Der Vorwärmer 1 kann in bekannter Weise in seinem unteren Bereich eine mit zusätzlichem Brennstoff (Pfeil 4) und Abluft des Kühlers 3 (Pfeil 5) versorgte Vorcalcinationszone zur weitgehenden Entsäuerung des vorgewärmten Gutes enthalten.

Der Drehrohrofen 2 wird in üblicher Weise von der Gutaustragsseite her befeuert (Pfeil 6). Die Abgase des Drehrohrofens 2 durchsetzen den Vorwärmer 1 und gelangen dann wahlweise entweder zu einem Kühlturm 7 oder zu einer Rohmühle 8, die zur Mahltrocknung des Rohmateriales dient.

Nach Durchsetzen des Kühlturmes 7 bzw. der Rohmühle 8 werden die Abgase entstaubt, z. B. in einem Elektrofilter 9, und gelangen dann in das nachgeschaltete Filter 10.

Das Filter 10 enthält drei als Schüttschichtreaktoren ausgebildete Adsorptionskammern 11, 12 und 13, die von den Abgasen nacheinander durchsetzt werden. Zumindest der ersten Adsorptionskammer 11 wird ein Adsorbens 14 zugeführt, das nach einer bestimmten Beladung mit NHₓ-Verbindungen, Schwermetallen, Spurenschadstoffen und SO₂ wenigstens teilweise aus der Adsorptionskammer 11 ausgeschleust und dem Guteinlaufbereich des Drehrohrofens 2 zugeführt wird (Pfeil 15).

Zwischen den Adsorptionskammern 12 und 13 (die gleichfalls das genannte Filtermedium enthalten können) wird NH₃ zugegeben (Pfeil 16), so daß in der Adsorptionskammer 13 eine Reduzierung der noch im Gasstrom vorhandenen NOₓ-Verbindungen mittels des NH₃-haltigen Gases erfolgt, wobei das Adsorbens hierbei eine katalytische Wirkung erfüllt.

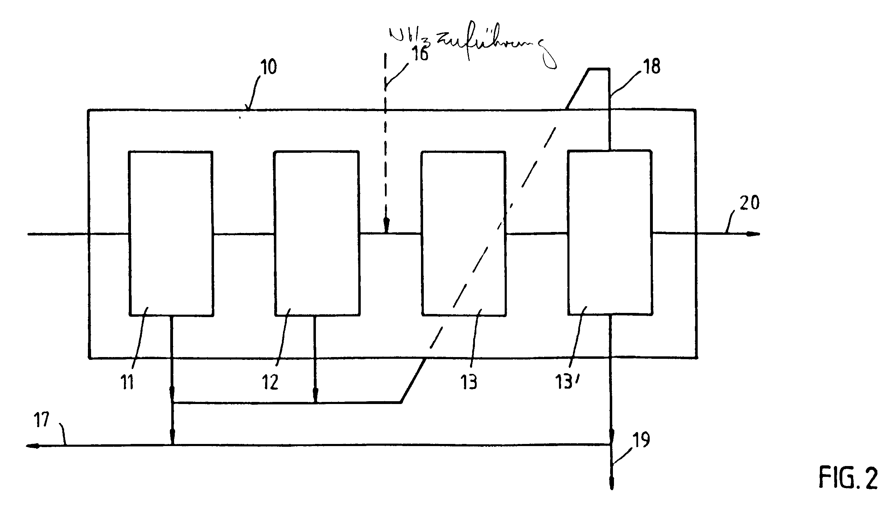

Fig.2 zeigt eine Variante des Filters 10. Hierbei sind vier Adsorptionskammern 11, 12, 13 und 13' vorgesehen, wobei die Zugabe von NH₃ (Pfeil 16) zwischen den Adsorptionskammern 12 und 13 erfolgt.

Aus den Adsorptionskammern 11 und/oder 12 ausgeschleustes Adsorbens wird teilweise zum Drehrohrofen 2 geführt (Pfeil 17). Ein weiterer Anteil dieses aus den Adsorptionskammern 11 und 12 ausgeschleusten Adsorbens kann der letzten Adsorptionskammer 13' zugeführt werden (Pfeil 18), um hier überschüssiges bzw. durchbrechendes NH₃ einzubinden. Aus der Adsorptionskammer 13' ausgeschleustes Adsorbens kann entweder - zumindest teilweise - zum Drehrohrofen 2 geführt werden (Pfeil 17), zur Deponie gelangen (Pfeil 19) oder anderweitig eingesetzt werden.

Die den Filter 10 verlassenden, gereinigten Abgase gelangen zum Kamin (Pfeil 20).

Es versteht sich, daß die Anzahl der Kammern des Filters 10 gewünschtenfalls auch weiter vergrößert werden kann.

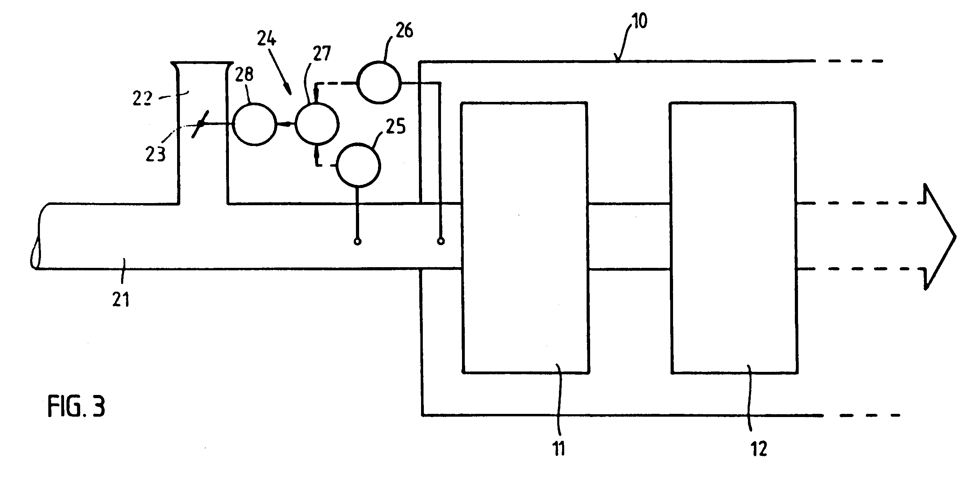

Fig.3 veranschaulicht, daß die Rohrleitung 21, die den Elektrofilter 9 mit dem Filter 10 verbindet, mit einem Frischluftanschluß 22 versehen sein kann, in dem eine Stellklappe 23 angeordnet ist.

Die Einstellung dieser Stellklappe 23 erfolgt mittels einer Steuereinrichtung 24, die unter anderem ein Temperaturmeßglied 25 und in diesem Beispiel ein Meßglied 26 enthält, das zur Bestimmung des Wassergehaltes der Abgase dient. Ein Rechner 27 ermittelt aus den beiden Meßwerten und zusätzlichen Randinformationen die erforderliche Frischluftmenge, die über eine Betätigungseinrichtung 28 und die Stellklappe 23 eingestellt wird.

## Patentansprüche

1. Verfahren zur Reinigung der Abgase von Anlagen zur Herstellung von Zementklinker, wobei das Rohmaterial in einer Vorwärmzone mit den heißen Abgasen einer Fertigbrennzone vorgewärmt und zumindest teilweise entsäuert wird, ehe das vorgewärmte und entsäuerte Gut in der Fertigbrennzone zu Zementklinker fertiggebrannt wird, und wobei die Abgase der Vorwärmzone in einer Filterzone von Schadstoffen gereinigt werden, gekennzeichnet durch folgende Merkmale:
a) die Filterzone enthält wenigstens eine als Schüttschichtreaktor ausgebildete Adsorptionsstufe, in der ein zur Einbindung von in den Abgasen der Vorwärmzone enthaltenen NHₓ-Verbindungen sowie Schwermetallen, Spurenschadstoffen und/oder SO₂ geeignetes Adsorbens vorgesehen ist;
b) wenigstens ein Teil dieses Adsorbens wird in bestimmten Zeitintervallen bzw. bei einer bestimmten Beladung mit NHₓ-Verbindungen sowie Schwermetallen und/oder Spurenschadstoffen aus der Adsorptionsstufe entfernt und in die Fertigbrenn- und/oder Vorwärmzone eingeführt.

2. Verfahren nach Anspruch 1, dadurch gekennzeichnet, daß die Filterzone wenigstens folgende, von den Abgasen nacheinander durchströmte Filterstufen aufweist:
a) eine zur Abscheidung von Staub dienende Filterstufe,
b) eine zur Einbindung von NHₓ-Verbindungen, Schwermetallen und Spurenschadstoffen sowie von SO₂ und Wasserdampf dienende Adsorptionsstufe,
c) eine zur zumindest teilweisen Reduzierung von NOₓ-Verbindungen dienende weitere Adsorptionsstufe.

3. Verfahren nach Anspruch 2, dadurch gekennzeichnet, daß zwischen der zur Einbindung von NHₓ-Verbindungen und SO₂ dienenden Adsorptionsstufe und der zur Reduzierung von NOₓ-Verbindungen dienenden Adsorptionsstufe ein NH₃-haltiges Gas in den zu reinigenden Abgasstrom eingeführt wird.

4. Verfahren nach Anspruch 1, dadurch gekennzeichnet, daß als Adsorbens ein kohlenstoffhaltiges Material, vorzugsweise Aktivkohle oder Koks, Verwendung findet.

5. Verfahren nach Anspruch 1, dadurch gekennzeichnet, daß als Adsorbens ein Zeolith Verwendung findet.

6. Verfahren nach Anspruch 1, dadurch gekennzeichnet, daß als Adsorbens ein stickstoffhaltiges Material, vorzugsweise eine Kalk-Stickstoff-Verbindung, Verwendung findet.

7. Verfahren nach den Ansprüchen 1 bis 3, dadurch gekennzeichnet, daß zumindest ein Teil des mit NHₓ-Verbindungen und SO₂ beladenen Adsorbens aus der zur Einbindung von NHₓ-Verbindungen bestimmten Adsorptionsstufe in die zur Reduzierung von NOₓ-Verbindungen dienende Adsorptionsstufe eingeführt wird.

8. Verfahren nach den Ansprüchen 1 und 2, dadurch gekennzeichnet, daß die zur Einbindung von NHₓ-Verbindungen, Schwermetallen und Spurenschadstoffen sowie von SO₂ und Wasserdampf dienende Adsorptionsstufe wenigstens zwei in Reihe geschaltete, vom Gas nacheinander durchströmte Adsorptionskammern aufweist, wobei vorzugsweise Adsorbens aus der ersten Adsorptionskammer in die Fertigbrenn- und/oder Vorwarmzone eingeführt wird.

9. Verfahren nach Anspruch 1, dadurch gekennzeichnet, daß die in die Fertigbrenn- und/oder Vorwärmzone eingeführte Menge des mit NHₓ-Verbindungen, Schwermetallen, SO₂ und/oder Wasserdampf beladenen Adsorbens in Abhängigkeit vom - vorzugsweise zwischen Vorwärmzone und Fertigbrennzone gemessenen - Cl₂- und/oder SO₃-Gehalt des Gutes geändert wird.

10. Verfahren nach Anspruch 1, dadurch gekennzeichnet, daß die Menge des aus der zur Einbindung von NHₓ-Verbindungen und/oder Schwermetallen dienenden Adsorptionsstufe entfernten Adsorbens sowie der Zeitpunkt dieser Entfernung durch Messung der Konzentration zumindest einer Abgaskomponente, vorzugsweise hinter dieser Adsorptionsstufe, bestimmt wird.

11. Verfahren nach den Ansprüchen 1 und 2, dadurch gekennzeichnet, daß der Wassergehalt des Abgases vor Eintritt in die zur Einbindung von NHₓ-Verbindungen, Schwermetallen, SO₂ und Wasserdampf dienende Adsorptionsstufe durch Zumischung von Frischluft, vorzugsweise auf einen Wert von unter 12 Vol-%, eingestellt wird.

12. Verfahren nach den Ansprüchen 1 und 2, dadurch gekennzeichnet, daß die Temperatur des Abgases vor Eintritt in die zur Einbindung von NHₓ-Verbindungen, Schwermetallen, SO₂ und Wasserdampf dienende Adsorptionsstufe durch Zumischung von Frischluft, vorzugsweise auf einen Wert zwischen 50 und 200°C, eingestellt wird.

13. Verfahren nach Anspruch 1, unter Verwendung einer von der Guteintragsseite her beheizten Fertigbrennzone, dadurch gekennzeichnet, daß zumindest ein Teil des aus der Adsorptionsstufe entfernten Adsorbens von der Gutaustragsseite her in die Fertigbrennzone eingeführt wird.

14. Verfahren nach Anspruch 1, unter Verwendung einer von der Gutaustragsseite her beheizten Fertigbrennzone, dadurch gekennzeichnet, daß zusätzlich zum Adsorbens ein kohlenstoffhaltiges Reduktionsmittel in den Guteintragsbereich der Fertigbrennzone eingeführt wird.

15. Verfahren nach Anspruch 1, unter Verwendung einer zwischen Vorwärmzone und Fertigbrennzone vorgesehenen Calcinierzone, dadurch gekennzeichnet, daß wenigstens ein Teil des aus der Adsorptionsstufe entfernten Adsorbens in die Calcinierzone eingeführt wird.

16. Verfahren nach Anspruch 1, dadurch gekennzeichnet, daß zumindest ein Teil des eingesetzten Brennstoffes durch Sekundärbrennstoff, wie Altreifen, Säureharze, Bleicherde, Brennstoff aus Müll, Deponiegas, Pyrolysegas, Lösungsmittelrückstände, PCB-kontaminiertes Altöl, Klärschlamm, Holzspäne, Fruchtschalen, gebildet wird.

17. Verfahren nach Anspruch 16, dadurch gekennzeichnet, daß zumindest ein Teil des eingesetzten Sekundärbrennstoffes in den zur Entsäuerung des Rohmateriales dienenden Teil der Vorwärmzone (Vorcalcinationszone) und/oder in den guteintragseiten Bereich der Fertigbrennzone eingeführt wird.

18. Verfahren nach Anspruch 16 zur Reinigung von Abgasen, die auch leicht verdampfbare Schwermetallverbindungen, insbesondere von Quecksilber, Thallium und/oder Cadmium enthalten, dadurch gekennzeichnet, daß zur Vermeidung von Anreicherungen der Schwermetallverbindungen durch Kreisläufe ein Teil der Abgase über einen Bypass aus dem System abgezogen wird.

19. Verfahren nach den Ansprüchen 1, 2 und 16 zur Reinigung von Abgasen, die auch leicht verdampfbare Schwermetallverbindungen, insbesondere von Quecksilber, Thallium und/oder Cadmium enthalten, dadurch gekennzeichnet, daß zur Vermeidung von Anreicherungen der Schwermetallverbindungen durch Kreisläufe ein Teil des in der Elektrofilterstufe abgeschiedenen Staubes aus dem System abgezogen und entweder verworfen oder durch Zumischung zum Zement in den Beton eingebunden wird.

20. Anlage zur Herstellung von Zementklinker, enthaltend
a) einen zur Vorwärmung und zumindest teilweisen Entsäuerung des Rohmateriales dienenden Vorwärmer (1),
b) einen zum Fertigbrennen des vorgewärmten und entsäuerten Gutes dienenden Drehrohrofen (2),
c) einen zur Entstaubung der Abgase des Vorwärmers (2) dienenden Elektrofilter (9),
gekennzeichnet durch folgende Merkmale:
d) dem Elektrofilter (9) ist ein weiterer Filter in Form eines Schüttschichtreaktors (10) nachgeschaltet, der ein zur Einbindung von NHₓ-Verbindungen sowie Schwermetallen und/oder Spurenschadstoffen geeignetes Adsorbens enthält;
e) es sind Einrichtungen vorgesehen, durch die wenigstens ein Teil des in dem weiteren Filter (10) enthaltenen Adsorbens in bestimmten Zeitintervallen bzw. bei einer bestimmten Beladung mit NHₓ-Verbindungen, Schwermetallen und/oder Spurenschadstoffen aus diesem Filter (10) entfernt und in den Drehrohrofen (2) und/oder Vorwärmer (1) eingeführt wird.

## Claims

1. Method of purifying the exhaust gases from plants for the production of cement clinker, in which the raw material is heated in a preheating zone with the hot exhaust gases from a final burning zone and at least partially deacidified before the preheated and deacidified material is finally burnt in the final burning zone to produce cement clinker, and in which the exhaust gases from the preheating zone are purified of pollutants in a filter zone, characterised by the following features:
a) the filter zone contains at least one adsorption zone which is constructed as a granular bed reactor and in which an adsorbent is provided which is suitable for fixing NHₓ compounds as well as heavy metals, trace pollutants and/or SO₂ contained in the exhaust gases from the preheating zone;
b) at least a proportion of this adsorbent is removed from the adsorption stage and introduced into the final burning and/or preheating zone at specific intervals of time or at a specific charge with NHₓ compounds as well as heavy metals and/or trace pollutants.

2. Method as claimed in claim 1, characterised in that the filter zone has at least the following filter stages through which the exhaust gases flow in succession:
a) a filter stage which serves for precipitation of dust,
b) an adsorption stage which serves for fixing NHₓ compounds, heavy metals and trace pollutants as well as SO₂ and water vapour,
c) a further adsorption stage which serves for at least partial reduction of NOₓ, compounds.

3. Method as claimed in claim 2, characterised in that a gas containing NH₃ is introduced into the exhaust gas stream to be purified between the adsorption stage which serves for fixing NHₓ compounds and SO₂ and the adsorption stage which serves for reducing NOₓ compounds.

4. Method as claimed in claim 1, characterised in that a carbonaceous material, preferably activated charcoal or coke, is used.

5. Method as claimed in claim 1, characterised in that a zeolite is used as adsorbent.

6. Method as claimed in claim 1, characterised in that a nitrogen-containing material, preferably a lime-nitrogen compound, is used.

7. Method as claimed in claims 1 to 3, characterised in that at least a proportion of the adsorbent charged with NHₓ compounds and SO₂ from the adsorption stage intended for fixing NHₓ compounds is introduced into the adsorption stage which serves for reducing NOₓ compounds.

8. Method as claimed in claims 1 and 2, characterised in that the adsorption stage which serves for fixing NHₓ compounds, heavy metals and trace pollutants as well as SO₂ and water vapour has at least two adsorption chambers which are arranged in series and through which gas flows in succession, and preferably adsorbent from the first adsorption chamber is introduced into the final burning zone and/or preheating zone.

9. Method as claimed in claim 1, characterised in that the quantity of adsorbent charged with NHₓ compounds, heavy metals, SO₂ and/or water vapour introduced into the final burning zone and/or preheating zone is altered depending upon the Cl₂ and/or SO₃ content of the material - preferably measured between the preheating zone and the final burning zone.

10. Method as claimed in claim 1, characterised in that the quantity of adsorbent removed from the adsorption stage which serves for fixing NHₓ compounds and/or heavy metals as well as the time at which this removal takes place is determined by measuring the concentration at least of one exhaust gas constituent, preferably after this adsorption stage.

11. Method as claimed in claims 1 and 2, characterised in that the water content of the exhaust gas before entry into the adsorption stage which serves for fixing NHₓ compounds, heavy metals, SO₂ and water vapour is set by admixture of fresh air, preferably to a value of below 12% by volume.

12. Method as claimed in claims 1 and 2, characterised in that the temperature of the exhaust gas before entry into the adsorption stage which serves for fixing NHₓ compounds, heavy metals, SO₂ and water vapour is set by admixture of fresh air, preferably to a value between 50 and 200°C.

13. Method as claimed in claim 1, using a final burning zone heated from the material inlet side, characterised in that at least a proportion of the adsorbent removed from the adsorption stage is introduced from the material discharge side into the final burning zone.

14. Method as claimed in claim 1, using a final burning zone heated from the material discharge side, characterised in that in addition to the adsorbent a carbonaceous reducing agent is introduced into the material inlet region of the final burning zone.

15. Method as claimed in claim 1, using a calcination zone provided between the preheating zone and the final burning zone, characterised in that at least a proportion of the adsorbent removed from the adsorption stage is introduced into the calcination zone.

16. Method as claimed in claim 1, characterised in that at least a proportion of the fuel used is formed by secondary fuel, such as old tyres, acid sludge, fuller's earth, fuel from refuse, gas from refuse tips, pyrolysis gas, solvent residues, PCB-contaminated used oil, sludge, wood chippings, fruit peelings.

17. Method as claimed in claim 16, characterised in that at least a proportion of the secondary fuel used is introduced into the part of the preheating zone (precalcination zone) which serves for deacidification of the raw material and/or into the region of the final burning zone on the material inlet side.

18. Method as claimed in claim 16 for purifying exhaust gases which also contain easily vaporisable heavy metal compounds, particularly of mercury, thallium and/or cadmium, characterised in that a proportion of the exhaust gases is withdrawn from the system via a bypass in order to avoid accumulations of the heavy metal compounds through circulation systems.

19. Method as claimed in claims 1, 2 and 16 for purifying exhaust gases which also contain easily vaporisable heavy metal compounds, particularly of mercury, thallium and/or cadmium, characterised in that a proportion of the dust precipitated in the electrostatic filter stage is withdrawn from the system and either rejected or fixed in the concrete by admixture with the cement in order to avoid accumulations of the heavy metal compounds through circulation systems.

20. Plant for producing cement clinker, containing
a) a preheater (1) which serves for preheating and at least partial deacidification of the raw material,
b) a rotary kiln (2) which serves for final burning of the preheated and deacidified material,
c) an electrostatic filter (9) which serves for cleaning dust from the exhaust gases from the preheater (2),
characterised by the following features:
d) a further filter (10) which is constructed as a granular bed reactor and which contains an adsorbent suitable for fixing NH_{X} compounds, heavy metals and/or trace pollutants is arranged after the electrostatic filter (9);
e) arrangements are provided by means of which at least a proportion of the adsorbent contained in the further filter (10) is removed from this filter (10) and introduced into the rotary kiln (2) and/or preheater (1) at specific intervals of time or at a specific charge with NHₓ compounds, heavy metals and/or trace pollutants.

## Revendications

1. Procédé d'épuration des gaz évacués d'installations de production de clinker de ciment, la matière première étant réchauffée dans une zone de réchauffage par les gaz chauds évacués d'une zone d'achèvement de la cuisson et étant au moins partiellement désacidifiée avant que la matière réchauffée et désacidifiée subisse l'achèvement de la cuisson dans une zone correspondante pour être transformée en clinker de ciment et les gaz évacués de la zone de réchauffage étant épurés des substances nocives dans une zone de filtrage, caractérisé par les particularités suivantes :
a) la zone de filtrage comprend au moins un étage d'adsorption conformé en réacteur à lit tassé et dans lequel est prévu un adsorbant qui convient à lier les composés de NHₓ aussi bien que les métaux lourds, les traces de substances nocives et/ou le SO₂ que contiennent les gaz évacués de la zone de réchauffage ;
b) au moins une partie de cet adsorbant est évacuée de l'étage d'adsorption à intervalles déterminés de temps ou lorsqu'il contient une charge déterminée de composés de NHₓ aussi bien que de métaux lourds et/ou de traces de substances nocives, puis est introduite dans la zone d'achèvement de la cuisson et/ou dans la zone de réchauffage.

2. Procédé selon la revendication 1, caractérisé en ce que la zone de filtrage comprend au moins les étages suivants de filtrage dans lesquels les gaz évacués passent successivement :
a) un étage de filtrage servant à la séparation de la poussière,
b) un étage d'adsorption destiné à lier les composés de NHₓ, les métaux lourds et les traces de substances nocives ainsi que le SO₂ et la vapeur d'eau,
c) un autre étage d'adsorption servant à la réduction au moins partielle des composés de NOₓ.

3. Procédé selon la revendication 2, caractérisé en ce qu'un gaz contenant du NH₃ est introduit dans le courant des gaz évacués et devant être purifiés, entre la zone d'adsorption destinée à lier les composants de NHₓ et le SO₂ et l'étage d'adsorption servant à la réduction des composés de NOₓ.

4. Procédé selon la revendication 1, caractérisé en ce que l'adsorbant utilisé est une matière carbonée, de préférence du charbon actif ou du coke.

5. Procédé selon la revendication 1, caractérisé en ce que l'adsorbant utilisé est une zéolithe.

6. Procédé selon la revendication 1, caractérisé en ce que l'adsorbant utilisé est une matière contenant de l'azote, de préférence un composé de chaux et d'azote.

7. Procédé selon les revendications 1 à 3, caractérisé en ce qu'au moins une partie de l'adsorbant chargé de composés de NHₓ et de SO₂ et évacuée de l'étage d'adsorption destiné à lier les composés de NHₓ est introduite dans l'étage d'adsorption servant à la réduction des composés de NOₓ.

8. Procédé selon les revendications 1 et 2, caractérisé en ce que l'étage d'adsorption servant à lier les composés de NHₓ, les métaux lourds et les traces de substances nocives ainsi que le SO₂ et la vapeur d'eau comprend au moins deux chambres d'adsorption montées en série et dans lesquelles le gaz passe successivement, l'adsorbant évacué de la première chambre d'adsorption étant avantageusement introduit dans la zone d'achèvement de la cuisson et/ou dans la zone de réchauffage.

9. Procédé selon la revendication 1, caractérisé en ce que la quantité de l'adsorbant chargé de composés de NHₓ, de métaux lourds, de SO₂ et/ou de vapeur d'eau qui est introduite dans la zone d'achèvement de la cuisson et/ou dans la zone de réchauffage est modifiée en fonction de la teneur de la matière en Cl₂ et/ou en SO₃ - mesurée de préférence entre la zone de réchauffage et la zone d'achèvement de la cuisson -.

10. Procédé selon la revendication 1, caractérisé en ce que la quantité d'adsorbant évacuée de l'étage d'adsorption servant à lier les composés de NHₓ et/ou les métaux lourds ainsi que l'instant de cette évacuation se déterminent par la mesure de la concentration d'au moins un composant des gaz évacués, de préférence en aval de cet étage d'adsorption.

11. Procédé selon les revendications 1 et 2, caractérisé en ce que la teneur en eau du gaz évacué est réglée, avant l'entrée de celui-ci dans l'étage d'adsorption servant à lier les composés de NHₓ, les métaux lourds, le SO₂ et la vapeur d'eau, par addition d'air frais, de préférence en une quantité inférieure à 12 % en volume.

12. Procédé selon les revendications 1 et 2, caractérisé en ce que la température du gaz évacué est réglée, avant l'entrée de celui-ci dans l'étage d'adsorption servant à lier les composés de NHₓ, les métaux lourds, le SO₂ et la vapeur d'eau, par addition d'air frais, de préférence à une valeur comprise entre 50 et 200°C.

13. Procédé selon la revendication 1, mettant en oeuvre une zone d'achèvement de la cuisson qui est chauffée par le côté d'introduction de la matière, caractérisé en ce qu'au moins une partie de l'adsorbant évacué de l'étage d'adsorption est introduite dans la zone d'achèvement de la cuisson par le côté de la sortie de la matière.

14. Procédé selon la revendication 1, mettant en oeuvre une zone d'achèvement de la cuisson qui est chauffée par le côté sortie de la matière, caractérisé en ce qu'en plus de l'adsorbant, un agent réducteur carboné est introduit dans la région d'entrée de la matière de la zone d'achèvement de la cuisson.

15. Procédé selon la revendication 1, mettant en oeuvre une zone de calcination prévue entre la zone de réchauffage et la zone d'achèvement de la cuisson, caractérisé en ce qu'au moins une partie de l'adsorbant évacué de l'étage d'adsorption est introduite dans la zone de calcination.

16. Procédé selon la revendication 1, caractérisé en ce qu'au moins une partie du combustible utilisé est formé de combustible secondaire tel que des pneumatiques usés, du goudron de dépôt de fond, de l'argile absorbante, du combustible provenant d'ordures ménagères, du gaz provenant de décharges, du gaz de pyrolyse, des résidus de solvants, de l'huile usée contaminée par du biphélynélène surchloré, de la boue de curage, des copeaux de bois, des écales.

17. Procédé selon la revendication 16, caractérisé en ce qu'au moins une partie du combustible secondaire utilisé est introduite dans la partie de la zone de réchauffage servant à la désacidification de la matière première (zone de précalcination) et/ou dans la partie de la zone d'achèvement de la cuisson située côté entrée de la matière.

18. Procédé selon la revendication 16 d'épuration de gaz évacués qui contiennent également des composés de métaux lourds s'évaporant facilement, en particulier de mercure, de thallium et/ou de cadmium, caractérisé en ce que, pour éviter des accumulations de composés de métaux lourds dans les circuits, une partie du gaz évacué est soutirée du système par une dérivation.

19. Procédé selon les revendications 1, 2 et 16 d'épuration de gaz évacués qui contiennent également des composés de métaux lourds qui s'évaporent facilement, en particulier de mercure, de thallium et/ou de cadmium, caractérisé en ce que, pour éviter des accumulations de composés de métaux lourds dans les circuits, une partie de la poussière séparée dans l'étage d'électro-filtrage est soutirée du système et soit jetée, soit liée par addition au ciment du béton.

20. Installation de production de clinker de ciment comprenant :
a) un réchauffeur (1) destiné au réchauffage et à la désacidification au moins partielle de la matière première,
b) un four tubulaire rotatif (2) destiné à l'achèvement de la cuisson de la matière réchauffée et désacidifiée,
c) un électro-filtre (9) destiné au dépoussiérage des gaz évacués du réchauffeur (2),
caractérisée par les particularités suivantes :
d)un autre filtre (10) constitué d'un réacteur a lit tassé et monté en aval de l'électro-filtre (9) contient un adsorbant qui convient pour lier les composés de NHₓ, les métaux lourds et/ou les traces de substances nocives;
e) des dispositifs sont prévus pour évacuer de l'autre filtre (10) au moins une partie de l'adsorbant que contient ce filtre (10) à intervalles de temps déterminés ou lorsque cet adsorbant contient une charge déterminée de composés de NHₓ, de métaux lourds et/ou de traces de substances nocives et pour l'introduire dans le four tubulaire rotatif (2) et/ou dans le réchauffeur (1).
